# EUROPEAN PATENT APPLICATION

(11) **EP 3 059 705 A1**
(43) Date of publication of application: **24.08.2016**
(21) Application number: 14800927.7
(22) Date of filing: 09.06.2014
(51) Int. Cl.: G06Q 40/02

(54) **TRANSACTION METHOD AND DEVICE FOR CARDLESS CASH WITHDRAWAL**

(30) Priority: 14.10.2013 CN 201310478317
(71) Applicant: ZTE Corporation, Shenzhen, Guangdong 518057 (CN)
(72) Inventor: JIA, Xin, Shenzhen Guangdong 518057 (CN)
(74) Representative: Brunazzi, Stefano
(86) International application number: PCT/CN2014/079520
(87) International publication number: WO 2014/187400

(57) **Abstract**

The present invention discloses a transaction method and apparatus for cardless cash withdrawal. When having received a cardless cash withdrawal reservation request of a user, a first bank server determines whether the reservation request is an interbank cardless cash withdrawal reservation request and satisfies a cardless cash withdrawal condition. When the reservation request is the interbank cardless cash withdrawal reservation request and satisfies the cardless cash withdrawal condition, a second bank server corresponding to bank identification information in the reservation request is determined, and the second bank server is informed of cardless cash withdrawal information, thereby allowing the second bank server to authorize a terminal controlled by same to accept cardless cash withdrawal made by the user. The interbank cardless cash withdrawal is achieved in order that the user can promptly make a cardless cash withdrawal operation at a cash withdrawal terminal that is nearest in an area where the user is located, thereby improving user experience.

## Description

### Technical Field

The present invention relates to the field of bank transactions, and in particular to a transaction method and apparatus for cardless cash withdrawal.

### Background

In daily life, people apply for lots of bank cards which are quite inconvenient to manage, and the problems of losing, damage and the like may be caused due to frequent carrying. However, when a person does not carry bank cards, it is quite inconvenient in an urgent need of money. Cardless cash withdrawal emerges accordingly in this context.

Most of current cardless cash withdrawal service refers to mobile banking-based reservation cash withdrawal, namely cardless cash withdrawal at a cash withdrawal terminal of a corresponding bank within a valid reservation period according to information such as a mobile phone number, a reservation number and a random password sent by the bank. The Ping An Bank is taken as an example, after a card holder fulfils a mobile banking business, cardless cash withdrawal reservation is performed by means of mobile banking in advance, after the reservation is successful, a mobile phone number or a reservation number is input on the cash withdrawal terminal of the Ping An Bank, a mobile phone receives a text message about a verification code sent by a Ping An Bank server, then the verification code in the text message, a withdrawal amount and a bank card withdrawal password are input on the cash withdrawal terminal, and therefore the cardless cash withdrawal is completed.

However, a conventional cardless cash withdrawal mode is only limited to be used in a corresponding bank, and cannot be used for interbank cash withdrawal.

### Summary

The embodiments of the present invention provide a transaction method and apparatus for cardless cash withdrawal, which are intended to achieve the interbank cash withdrawal in order that a user can promptly make a cardless cash withdrawal operation at a cash withdrawal terminal that is nearest in an area where the user is located, thereby improving user experience.

An embodiment of the present invention provides a transaction method for cardless cash withdrawal, which may include that:
when having received a cardless cash withdrawal reservation request of a user, a first bank server determines whether the reservation request is an interbank cardless cash withdrawal reservation request and satisfies a cardless cash withdrawal condition;
when the reservation request is the interbank cardless cash withdrawal reservation request and satisfies the cardless cash withdrawal condition, the first bank server determines a second bank server corresponding to bank identification information in the reservation request according to a pre-stored mapping relationship between a bank server and the bank identification information; and
the first bank server informs the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

Preferably, after the first bank server informs the determined second bank server of the interbank cardless cash withdrawal information corresponding to the request, the method may include that:
the second bank server verifies the received interbank cardless cash withdrawal information; and
after the received interbank cardless cash withdrawal information is approved, the second bank server authorizes the cash withdrawal terminal controlled by same to accept the cardless cash withdrawal operation made by the user according to the received interbank cardless cash withdrawal information.

Preferably, after the first bank server informs the determined second bank server of the interbank cardless cash withdrawal information corresponding to the reservation request, thereby allowing the second bank server to authorize the cash withdrawal terminal controlled by same to accept the cardless cash withdrawal operation made by the user according to the received interbank cardless cash withdrawal information, the method may further include that:
when having received a cardless cash withdrawal request sent by the cash withdrawal terminal controlled by same, the second bank server analyses whether there is pre-stored interbank cardless cash withdrawal information which is received from the first bank server and is consistent with the cardless cash withdrawal information in the cardless cash withdrawal request; and
when there is the pre-stored interbank cardless cash withdrawal information which is received from the first bank server and is consistent with the cash withdrawal information in the cash withdrawal request, the second bank server controls the cash withdrawal terminal, sending the cardless cash withdrawal request, to make the cardless cash withdrawal operation.

Preferably, the interbank cardless cash withdrawal information may include a specific cash withdrawal terminal recognition identifier and interbank cardless cash withdrawal voucher information.

Preferably, the method may further include that:
After the cardless cash withdrawal operation is successful, the second bank server sets a transaction completion identifier for cardless cash withdrawal reservation information, and sends the cardless cash withdrawal reservation information with the transaction completion identifier to the first bank server.

An embodiment of the present invention also provides a transaction apparatus for cardless cash withdrawal, which may include:
an analysis module, configured to determine, when having received a cardless cash withdrawal reservation request of a user, whether the reservation request is an interbank cardless cash withdrawal reservation request and satisfies a cardless cash withdrawal condition;
a processing module, configured to determine, when the reservation request is the interbank cardless cash withdrawal reservation request and satisfies the cardless cash withdrawal condition, a second bank server corresponding to bank identification information in the reservation request according to a pre-stored mapping relationship between a bank server and the bank identification information; and
a data transceiver module, configured to inform the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

Preferably, the apparatus may further include an verifying module,
the verifying module being configured to verify the received interbank cardless cash withdrawal information, and
authorize the cash withdrawal terminal controlled by same to accept the cardless cash withdrawal operation made by the user according to the received interbank cardless cash withdrawal information after the received interbank cardless cash withdrawal information is approved.

Preferably, the analysis module may be further configured to analyse, when having received a cardless cash withdrawal request sent by the cash withdrawal terminal controlled by same, whether there is pre-stored interbank cardless cash withdrawal information which is received from the first bank server and is consistent with the cardless cash withdrawal information in the cardless cash withdrawal request; and
the processing module may be configured to control, when there is the pre-stored interbank cardless cash withdrawal information which is received from the first bank server and is consistent with the cash withdrawal information in the cash withdrawal request, the cash withdrawal terminal, sending the cardless cash withdrawal request, to make the cardless cash withdrawal operation.

Preferably, the interbank cardless cash withdrawal information may include a specific cash withdrawal terminal recognition identifier and interbank cardless cash withdrawal voucher information.

Preferably, the processing module may be further configured to set a transaction completion identifier for cardless cash withdrawal reservation information after the cardless cash withdrawal operation is successful, and send the cardless cash withdrawal reservation information with the transaction completion identifier to the first bank server via the data transceiver module.

Compared with the conventional art, the embodiments of the present invention have the advantages as follows. When having received the cardless cash withdrawal reservation request of the user, the first bank server determines whether the reservation request is the interbank cardless cash withdrawal reservation request and satisfies the cardless cash withdrawal condition. When the reservation request is the interbank cardless cash withdrawal reservation request and satisfies the cardless cash withdrawal condition, the second bank server corresponding to the bank identification information in the reservation request is determined, and the second bank server is informed of the cardless cash withdrawal information, thereby allowing the second bank server to authorize the terminal controlled by same to accept the cardless cash withdrawal made by the user. The interbank cardless cash withdrawal is achieved in order that the user can promptly make the cardless cash withdrawal operation at the cash withdrawal terminal that is nearest in the area where the user is located, thereby improving the user experience.

### Brief Description of the Drawings

Fig. 1 is a flow diagram of a transaction method for cardless cash withdrawal according to a first embodiment of the present invention;
Fig. 2 is a flow diagram of a transaction method for cardless cash withdrawal according to a second embodiment of the present invention;
Fig. 3 is a flow diagram of a transaction method for cardless cash withdrawal according to a third embodiment of the present invention; and
Fig. 4 is a functional module diagram of a transaction apparatus for cardless cash withdrawal according to a preferred embodiment of the present invention.

The aim fulfilment, functional characteristics and advantages of the present invention are further described with reference to the embodiments and the drawings.

### Detailed Description of the Embodiments

It should be understood that the specific embodiments described here are only intended to explain the present invention, and do not limit the present invention.

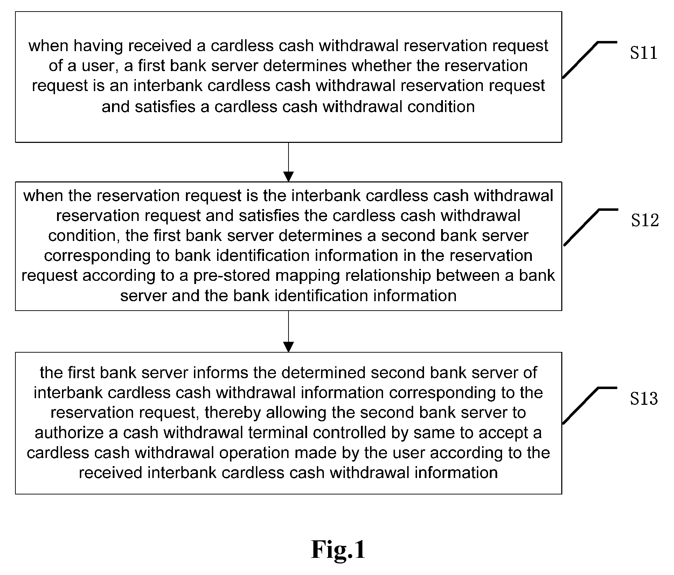

Fig. 1 shows a flow diagram of a transaction method for cardless cash withdrawal according to a first embodiment of the present invention.

It must be emphasised that the flow diagram shown in Fig. 1 is only a preferred embodiment. Those skilled in the art should know that any embodiments constructed on the basis of the idea of the present invention should not depart from a coverage range of the technical solution as follows.

When having received a cardless cash withdrawal reservation request of a user, a first bank server determines whether the reservation request is an interbank cardless cash withdrawal reservation request and satisfies a cardless cash withdrawal condition; when the reservation request is the interbank cardless cash withdrawal reservation request and satisfies the cardless cash withdrawal condition, the first bank server determines a second bank server corresponding to bank identification information in the reservation request according to a pre-stored mapping relationship between a bank server and the bank identification information; and the first bank server informs the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

The transaction method for cardless cash withdrawal is gradually achieved according to the embodiment by means of the specific steps as follows.

Step S11: When having received a cardless cash withdrawal reservation request of a user, a first bank server determines whether the reservation request is an interbank cardless cash withdrawal reservation request and satisfies a cardless cash withdrawal condition.

Specifically, the first bank server provides a human-machine interaction interface to allow login of the user and allow the user to browse information, associated with the user, on the first bank server. The human-machine interaction interface has a business menu such as a bank card account management menu, and business operation information, provided by a random first bank server, about transaction information query, cardless cash withdrawal and the like. A login user number and login password of a first bank server are registered, and the user number is bound with a unique communication mode of the user, which may be any one of other unique communication modes such as a mobile phone number or an E-mail address. The user logs in the first bank server by using the registered login user number and login password via a terminal loading an application program of the first bank server, and performs browsing operation via the human-machine interaction interface provided by the first bank server. When having received the cardless cash withdrawal reservation request of the user, the first bank server determines whether the reservation request is the interbank cardless cash withdrawal reservation request and satisfies the cardless cash withdrawal condition. The reservation request includes a reserved bank card number, reserved cardless cash withdrawal bank identification information, a withdrawal amount, a mobile phone number of a user waiting for withdrawing money and the like. After the cardless cash withdrawal reservation request of the user has been received, a random verification code is sent to a destination address corresponding to the communication mode bound with the user number, and when the user inputs the verification code via the human-machine interaction interface on the terminal, it is determined that the reservation request satisfies the cardless cash withdrawal condition. The reserved cardless cash withdrawal bank identification information in the reservation request is compared with first bank identification information to verify whether it is interbank cardless cash withdrawal. When the reserved cardless cash withdrawal bank identification information in the reservation request is inconsistent with the first bank identification information, it is determined that the cardless cash withdrawal reservation request is the interbank cardless cash withdrawal reservation request. The bank identification information may be information capable of identifying a specific type of a bank such as a bank name or an identification code of a cash withdrawal terminal authorized by the bank. When the reservation request is the interbank cardless cash withdrawal reservation request and satisfies the cardless cash withdrawal condition, Step S12 is executed. When the reservation request does not satisfy the cardless cash withdrawal condition, the user is reminded of an unsuccessful reservation and reminded of an ability to reserve again. When the reservation request is the cardless cash withdrawal reservation request of the bank and satisfies the cardless cash withdrawal condition, the user is informed of a successful reservation, such that the user can make a cardless cash withdrawal operation at a random cash withdrawal terminal capable of performing cardless cash withdrawal.

Step S12: When the reservation request is the interbank cardless cash withdrawal reservation request and satisfies the cardless cash withdrawal condition, the first bank server determines a second bank server corresponding to bank identification information in the reservation request according to a pre-stored mapping relationship between a bank server and the bank identification information.

Step S13: The first bank server informs the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

Specifically, when the reservation request is the interbank cardless cash withdrawal reservation request and satisfies the cardless cash withdrawal condition, the first bank server acquires the cardless cash withdrawal bank identification information in the cardless cash withdrawal request, determines the second bank server corresponding to the bank identification information in the reservation request according to the pre-stored mapping relationship between the bank server and the bank identification information, and namely determines that the user will perform cardless cash withdrawal in a second bank. The first bank server informs the determined second bank server of the interbank cardless cash withdrawal information corresponding to the reservation request, thereby allowing the second bank server to authorize the cash withdrawal terminal controlled by same to accept the cardless cash withdrawal operation made by the user according to the received interbank cardless cash withdrawal information. The second bank server verifies the received interbank cardless cash withdrawal information. After the received interbank cardless cash withdrawal information is approved, the second bank server authorizes the cash withdrawal terminal controlled by same to accept the cardless cash withdrawal operation made by the user according to the received interbank cardless cash withdrawal information. Preferably in the embodiment, the first bank server controls a cardless cash withdrawal transaction. In other embodiments of the present invention, the cardless cash withdrawal transaction can be controlled by a third-party server. A specific process is that: the third-party server establishes communication connection with each bank server for data interaction, and the user performs login according to a registered login name and login password of the third-party server by loading an application program of the third-party server; the third-party server can be used for receiving a cardless cash withdrawal reservation request of any bank account, determining a first bank server corresponding to the cardless cash withdrawal reservation request by means of reservation contents in the received reservation request according to a mapping relationship between a bank card number and a bank server, sending the cardless cash withdrawal reservation request to the determined first bank server, analysing whether the reservation request is an interbank cardless cash withdrawal reservation request, comparing reserved cardless cash withdrawal bank identification information in the reservation request with first bank identification information to verify whether it is interbank cardless cash withdrawal, and determining that the cardless cash withdrawal reservation request is the interbank cardless cash withdrawal reservation request when the reserved cardless cash withdrawal bank identification information in the reservation request is inconsistent with the first bank identification information. When the reservation request is the interbank cardless cash withdrawal reservation request and satisfies the cardless cash withdrawal condition, the third-party server determines a second bank server corresponding to bank identification information in the reservation request according to a pre-stored mapping relationship between the bank server and the bank identification information, and informs the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

In another embodiment of the present invention, the reservation request can also include second bank specific cash withdrawal terminal identification information, and the specific cash withdrawal terminal identification information is an identification code of a cash withdrawal terminal designated in the second bank and can be any information capable of distinguishing the cash withdrawal terminal such as a QR code. After having received cardless cash withdrawal information sent by a first bank, the second server acquires the second bank specific cash withdrawal terminal identification information included in the received cardless cash withdrawal information, and the second bank server verifies the received interbank cardless cash withdrawal information. After the received interbank cardless cash withdrawal information is approved, the second bank server authorizes a cash withdrawal terminal which is controlled by same and corresponds to the specific cash withdrawal terminal identification information to accept the cardless cash withdrawal operation of the user. Namely, only the cash withdrawal terminal corresponding to the specific cash withdrawal terminal identification information is authorized to accept the cardless cash withdrawal operation of the user, and the user can make the cardless cash withdrawal operation only at the cash withdrawal terminal corresponding to the specific cash withdrawal terminal identification information included in the reservation request thereof. By performing cardless cash withdrawal authorisation on the cash withdrawal terminal corresponding to the specific cash withdrawal terminal identification information, the user is prevented from making the cardless cash withdrawal operation at a cash withdrawal terminal in a random area via the cardless cash withdrawal information, thereby reducing a fund management risk.

In the embodiment, when having received the cardless cash withdrawal reservation request of the user, the first bank server determines whether the reservation request is the interbank cardless cash withdrawal reservation request and satisfies the cardless cash withdrawal condition. When the reservation request is the interbank cardless cash withdrawal reservation request and satisfies the cardless cash withdrawal condition, the second bank server corresponding to the bank identification information in the reservation request is determined, and the second bank server is informed of the cardless cash withdrawal information, thereby allowing the second bank server to authorize the terminal controlled by same to accept the cardless cash withdrawal made by the user. The interbank cardless cash withdrawal is achieved in order that the user can promptly make the cardless cash withdrawal operation at the cash withdrawal terminal that is nearest in the area where the user is located, thereby improving the user experience.

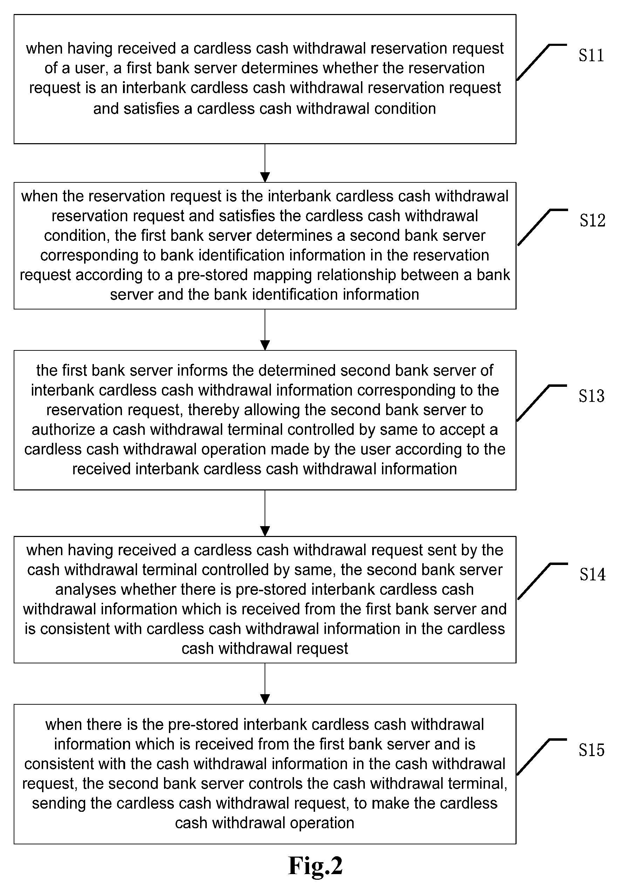

Fig. 2 shows a flow diagram of a transaction method for cardless cash withdrawal according to a second embodiment of the present invention.

Based on the first embodiment, after Step S13, the method further includes the steps as follows.

Step S14: When having received a cardless cash withdrawal request sent by the cash withdrawal terminal controlled by same, the second bank server analyses whether there is pre-stored interbank cardless cash withdrawal information which is received from the first bank server and is consistent with cardless cash withdrawal information in the cardless cash withdrawal request.

Step S15: When there is the pre-stored interbank cardless cash withdrawal information which is received from the first bank server and is consistent with the cash withdrawal information in the cash withdrawal request, the second bank server controls a cash withdrawal terminal, sending the cardless cash withdrawal request, to make the cardless cash withdrawal operation.

Specifically, when having received the interbank cardless cash withdrawal information sent by the first bank server, the second bank server authorizes the cash withdrawal terminal controlled by the second bank server to accept the cardless cash withdrawal operation of the user, and pre-stores the interbank cardless cash withdrawal information. When having received the cardless cash withdrawal request sent by the authorized cash withdrawal terminal controlled by same, the second bank server analyses whether there is the pre-stored interbank cardless cash withdrawal information which is received from the first bank server and is consistent with the cardless cash withdrawal information in the cardless cash withdrawal request. When there is the pre-stored interbank cardless cash withdrawal information which is received from the first bank server and is consistent with the cash withdrawal information in the cash withdrawal request, the second bank server controls the cash withdrawal terminal, sending the cardless cash withdrawal request, to make the cardless cash withdrawal operation. If there is not the pre-stored interbank cardless cash withdrawal information which is received from the first bank server and is consistent with the cardless cash withdrawal information in the cardless cash withdrawal request, the user is reminded of unsuccessful cardless cash withdrawal and reminded to input correct cardless cash withdrawal information again. If a valid reserved cardless cash withdrawal period is set, it is analysed whether the cardless cash withdrawal request goes beyond the valid period. When the cardless cash withdrawal request does not go beyond the valid period, it is analysed whether there is the pre-stored interbank cardless cash withdrawal information which is received from the first bank server and is consistent with the cardless cash withdrawal information in the cardless cash withdrawal request, namely it is analysed whether a login user name and login password of the user, sent by the authorized cash withdrawal terminal, are consistent with a login name and a login password in the reservation request. When the login user name and login password of the user, sent by the authorized cash withdrawal terminal, are consistent with the login name and the login password in the reservation request, the cash withdrawal terminal, sending the cardless cash withdrawal request, is controlled to make the cardless cash withdrawal operation. When the cardless cash withdrawal request goes beyond the valid period, the user is reminded not to make the cardless cash withdrawal operation. That is also to say, when having received the cardless cash withdrawal request sent by the cash withdrawal terminal for cardless cash withdrawal, authorized by same, the second bank server informs the first bank server of the cardless cash withdrawal request, the first bank server sends a random password to a destination address of a communication mode bound with the user, and the second bank server verifies whether a random password sent by the user via the cash withdrawal terminal is consistent with the random password which is issued by the first bank server and corresponds to the cardless cash withdrawal request. When the two random passwords are consistent, the cash withdrawal terminal, sending the cardless cash withdrawal request, is controlled to make the cardless cash withdrawal operation. Namely, the user can make a withdrawal operation for a withdrawal amount included in the reservation request via the cash withdrawal terminal. When the two random passwords are inconsistent, the user is reminded to input a correct random password, the password is invalid after being input wrongly for three times, and the user is reminded to re-acquire a random password.

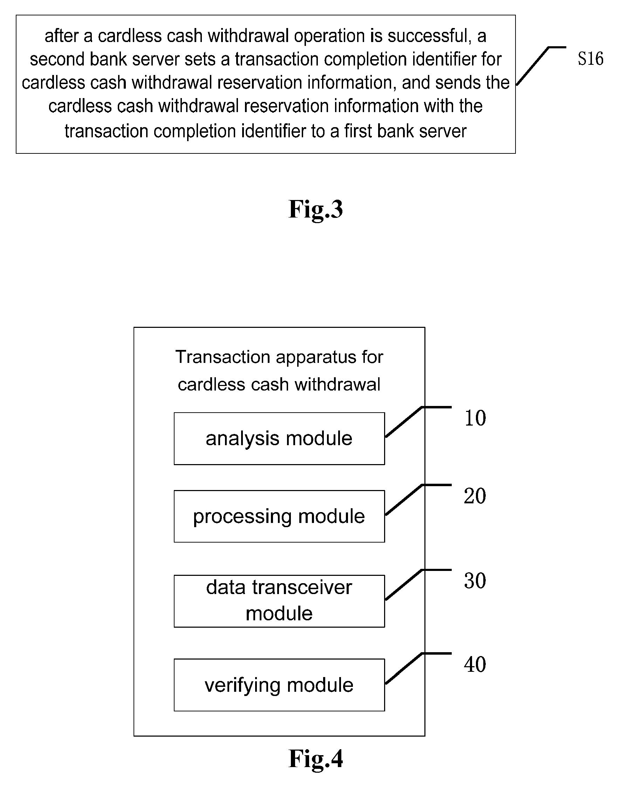

Fig. 3 shows a flow diagram of a transaction method for cardless cash withdrawal according to a third embodiment of the present invention.

Based on the first embodiment and the second embodiment, the method further includes that:
Step S16: after a cardless cash withdrawal operation is successful, a second bank server sets a transaction completion identifier for cardless cash withdrawal reservation information, and sends the cardless cash withdrawal reservation information with the transaction completion identifier to a first bank server.

Specifically, after the user successfully completes the interbank cardless cash withdrawal operation via the cash withdrawal terminal authorized by the second bank server, the second bank server sets the transaction completion identifier for the cardless cash withdrawal reservation information, and sends the cardless cash withdrawal reservation information with the transaction completion identifier to the first bank server. Namely, transaction information corresponding to a bank card number in correspondence to the reservation request is sent to the first bank server, such that the user can log in the first bank server via a terminal loading an application program of the first bank server, and can browse the transaction information of the own bank card number via a human-machine interaction interface provided by the first bank server to promptly manage and control fund transaction information of an own bank card account, thereby reasonably deploy own funds. In the other embodiments of the present invention, the second bank server may set the transaction completion identifier for the cardless cash withdrawal reservation information, and may send the cardless cash withdrawal reservation information with the transaction completion identifier to a third-party server. Namely, the transaction information corresponding to the bank card number in correspondence to the reservation request is sent to the third-party server, such that the user can log in the third-party server via a terminal loading an application program of the third-party server, and can browse the transaction information of the own bank card number via a human-machine interaction interface provided by the third-party server.

Fig. 4 shows a functional module diagram of a transaction apparatus for cardless cash withdrawal according to a preferred embodiment of the present invention. The apparatus includes: an analysis module 10, a processing module 20, a data transceiver module 30 and an verifying module 40.

The analysis module 10 is configured to determine, when having received a cardless cash withdrawal reservation request of a user, whether the reservation request is an interbank cardless cash withdrawal reservation request and satisfies a cardless cash withdrawal condition.

Specifically, in the embodiment, the transaction apparatus for cardless cash withdrawal is a first bank server preferably. The data transceiver module 30 provides a human-machine interaction interface to allow login of the user and allow the user to browse information, associated with the user, on the first bank server. The human-machine interaction interface has a business menu such as a bank card account management menu, and business operation information, provided by a random first bank server, about transaction information query, cardless cash withdrawal and the like. A login user number and login password of a first bank server are registered, and the user number is bound with a unique communication mode of the user, which may be any one of other unique communication modes such as a mobile phone number or an E-mail address. The user logs in the first bank server by using the registered login user number and login password via a terminal loading an application program of the first bank server, and performs browsing operation via the human-machine interaction interface provided by the data transceiver module 30. When having received the cardless cash withdrawal reservation request of the user, the analysis module 10 determines whether the reservation request is the interbank cardless cash withdrawal reservation request and satisfies the cardless cash withdrawal condition. The reservation request includes a reserved bank card number, reserved cardless cash withdrawal bank identification information, a withdrawal amount, a mobile phone number of a user waiting for withdrawing money and the like. After the cardless cash withdrawal reservation request of the user has been received, a random verification code is sent to a destination address corresponding to the communication mode bound with the user number, and when the user inputs the verification code via the human-machine interaction interface on the terminal, it is determined that the reservation request satisfies the cardless cash withdrawal condition. The reserved cardless cash withdrawal bank identification information in the reservation request is compared with first bank identification information to verify whether it is interbank cardless cash withdrawal. When the reserved cardless cash withdrawal bank identification information in the reservation request is inconsistent with the first bank identification information, it is determined that the cardless cash withdrawal reservation request is the interbank cardless cash withdrawal reservation request. The bank identification information may be information capable of identifying a specific type of a bank such as a bank name or an identification code of a cash withdrawal terminal authorized by the bank. When the reservation request is the interbank cardless cash withdrawal reservation request and satisfies the cardless cash withdrawal condition, the processing module 20 determines a second bank server corresponding to bank identification information in the reservation request according to a pre-stored mapping relationship between a bank server and the bank identification information. When the reservation request does not satisfy the cardless cash withdrawal condition, the data transceiver module 30 reminds the user of an unsuccessful reservation and reminds the user of an ability to reserve again. When the reservation request is the cardless cash withdrawal reservation request of the bank and satisfies the cardless cash withdrawal condition, the data transceiver module 30 informs the user of a successful reservation, such that the user can make a cardless cash withdrawal operation at a random cash withdrawal terminal capable of performing cardless cash withdrawal.

The processing module 20 is configured to determine, when the reservation request is the interbank cardless cash withdrawal reservation request and satisfies the cardless cash withdrawal condition, the second bank server corresponding to the bank identification information in the reservation request according to the pre-stored mapping relationship between the bank server and the bank identification information.

The data transceiver module 30 is configured to inform the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

Specifically, when the reservation request is the interbank cardless cash withdrawal reservation request and satisfies the cardless cash withdrawal condition, the processing module 20 acquires the cardless cash withdrawal bank identification information in the cardless cash withdrawal request, determines the second bank server corresponding to the bank identification information in the reservation request according to the pre-stored mapping relationship between the bank server and the bank identification information, and namely determines that the user will perform cardless cash withdrawal in a second bank. The data transceiver module 30 informs the determined second bank server of the interbank cardless cash withdrawal information corresponding to the reservation request, thereby allowing the second bank server to authorize the cash withdrawal terminal controlled by same to accept the cardless cash withdrawal operation made by the user according to the received interbank cardless cash withdrawal information. The verifying module 40 verifies the received interbank cardless cash withdrawal information, and authorizes the cash withdrawal terminal controlled by same to accept the cardless cash withdrawal operation made by the user according to the received interbank cardless cash withdrawal information after the received interbank cardless cash withdrawal information is approved. Preferably in the embodiment, the first bank server controls a cardless cash withdrawal transaction. In other embodiments of the present invention, the cardless cash withdrawal transaction can be controlled by a third-party server. A specific process is that: the third-party server establishes communication connection with each bank server for data interaction, and the user performs login according to a registered login name and login password of the third-party server by loading an application program of the third-party server; the third-party server can be used for receiving a cardless cash withdrawal reservation request of any bank account, determining a first bank server corresponding to the cardless cash withdrawal reservation request by means of reservation contents in the received reservation request according to a mapping relationship between a bank card number and a bank server, sending the cardless cash withdrawal reservation request to the determined first bank server, analysing whether the reservation request is an interbank cardless cash withdrawal reservation request, comparing reserved cardless cash withdrawal bank identification information in the reservation request with first bank identification information to verify whether it is interbank cardless cash withdrawal, and determining that the cardless cash withdrawal reservation request is the interbank cardless cash withdrawal reservation request when the reserved cardless cash withdrawal bank identification information in the reservation request is inconsistent with the first bank identification information. When the reservation request is the interbank cardless cash withdrawal reservation request and satisfies the cardless cash withdrawal condition, the third-party server determines a second bank server corresponding to bank identification information in the reservation request according to a pre-stored mapping relationship between the bank server and the bank identification information, and informs the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

In the other embodiments of the present invention, the reservation request can also include second bank specific cash withdrawal terminal identification information, and the specific cash withdrawal terminal identification information is an identification code of a cash withdrawal terminal designated in the second bank and can be any information capable of distinguishing the cash withdrawal terminal such as a QR code. After having received cardless cash withdrawal information sent by a first bank, the second server acquires the second bank specific cash withdrawal terminal identification information included in the received cardless cash withdrawal information, and the second bank server verifies the received interbank cardless cash withdrawal information. After the received interbank cardless cash withdrawal information is approved, the second bank server authorizes a cash withdrawal terminal which is controlled by same and corresponds to the specific cash withdrawal terminal identification information to accept the cardless cash withdrawal operation of the user. Namely, the verifying module 40 only authorizes the cash withdrawal terminal corresponding to the specific cash withdrawal terminal identification information to accept the cardless cash withdrawal operation of the user, and the user can make the cardless cash withdrawal operation only at the cash withdrawal terminal corresponding to the specific cash withdrawal terminal identification information included in the reservation request thereof. By performing cardless cash withdrawal authorisation on the cash withdrawal terminal corresponding to the specific cash withdrawal terminal identification information, the user is prevented from making the cardless cash withdrawal operation at a cash withdrawal terminal in a random area via the cardless cash withdrawal information, thereby reducing a fund management risk.

In the embodiment, when having received the cardless cash withdrawal reservation request of the user, the analysis module 10 determines whether the reservation request is the interbank cardless cash withdrawal reservation request and satisfies the cardless cash withdrawal condition. When the reservation request is the interbank cardless cash withdrawal reservation request and satisfies the cardless cash withdrawal condition, the processing module 20 determines the second bank server corresponding to the bank identification information in the reservation request, and informs the second bank server of the cardless cash withdrawal information via the data transceiver module 30, thereby allowing the second bank server to authorize the terminal controlled by same to accept the cardless cash withdrawal made by the user. The interbank cardless cash withdrawal is achieved in order that the user can promptly make the cardless cash withdrawal operation at the cash withdrawal terminal that is nearest in the area where the user is located, thereby improving the user experience.

Furthermore, the analysis module 10 is further configured to analyse, when having received a cardless cash withdrawal request sent by the cash withdrawal terminal controlled by same, whether there is pre-stored interbank cardless cash withdrawal information which is received from the first bank server and is consistent with the cardless cash withdrawal information in the cardless cash withdrawal request; and
the processing module 20 is configured to control, when there is the pre-stored interbank cardless cash withdrawal information which is received from the first bank server and is consistent with the cash withdrawal information in the cash withdrawal request, the cash withdrawal terminal, sending the cardless cash withdrawal request, to make the cardless cash withdrawal operation.

Specifically, when having received the interbank cardless cash withdrawal information sent by the first bank server, the second bank server authorizes the cash withdrawal terminal controlled by the second bank server to accept the cardless cash withdrawal operation of the user, and pre-stores the interbank cardless cash withdrawal information. When having received the cardless cash withdrawal request sent by the authorized cash withdrawal terminal controlled by same, the second bank server analyses whether there is the pre-stored interbank cardless cash withdrawal information which is received from the first bank server and is consistent with the cardless cash withdrawal information in the cardless cash withdrawal request. When there is the pre-stored interbank cardless cash withdrawal information which is received from the first bank server and is consistent with the cash withdrawal information in the cash withdrawal request, the second bank server controls the cash withdrawal terminal, sending the cardless cash withdrawal request, to make the cardless cash withdrawal operation. If there is not the pre-stored interbank cardless cash withdrawal information which is received from the first bank server and is consistent with the cardless cash withdrawal information in the cardless cash withdrawal request, the user is reminded of unsuccessful cardless cash withdrawal and reminded to input correct cardless cash withdrawal information again. If a valid reserved cardless cash withdrawal period is set, it is analysed whether the cardless cash withdrawal request goes beyond the valid period. When the cardless cash withdrawal request does not go beyond the valid period, the analysis module 10 analyses whether there is the pre-stored interbank cardless cash withdrawal information which is received from the first bank server and is consistent with the cardless cash withdrawal information in the cardless cash withdrawal request, and namely analyses whether a login user name and login password of the user, sent by the authorized cash withdrawal terminal, are consistent with a login name and a login password in the reservation request. When the login user name and login password of the user, sent by the authorized cash withdrawal terminal, are consistent with the login name and the login password in the reservation request, the cash withdrawal terminal, sending the cardless cash withdrawal request, is controlled to make the cardless cash withdrawal operation. When the cardless cash withdrawal request goes beyond the valid period, the user is reminded not to make the cardless cash withdrawal operation. That is also to say, when having received the cardless cash withdrawal request sent by the cash withdrawal terminal for cardless cash withdrawal, authorized by same, the data transceiver module 30 informs the first bank server of the cardless cash withdrawal request, the first bank server sends a random password to a destination address of a communication mode bound with the user, and the second bank server verifies whether a random password sent by the user via the cash withdrawal terminal is consistent with the random password which is issued by the first bank server and corresponds to the cardless cash withdrawal request. When the two random passwords are consistent, the cash withdrawal terminal, sending the cardless cash withdrawal request, is controlled to make the cardless cash withdrawal operation. Namely, the user can make a withdrawal operation for a withdrawal amount included in the reservation request via the cash withdrawal terminal. When the two random passwords are inconsistent, the user is reminded to input a correct random password, the password is invalid after being input wrongly for three times, and the user is reminded to re-acquire a random password.

Furthermore, the processing module 20 is further configured to set a transaction completion identifier for cardless cash withdrawal reservation information after the cardless cash withdrawal operation is successful, and send the cardless cash withdrawal reservation information with the transaction completion identifier to the first bank server via the data transceiver module.

Specifically, after the user successfully completes the interbank cardless cash withdrawal operation via the cash withdrawal terminal authorized by the second bank server, the processing module 20 sets the transaction completion identifier for the cardless cash withdrawal reservation information, and sends the cardless cash withdrawal reservation information with the transaction completion identifier to the first bank server. Namely, transaction information corresponding to a bank card number in correspondence to the reservation request is sent to the first bank server, such that the user can log in the first bank server via a terminal loading an application program of the first bank server, and can browse the transaction information of the own bank card number via a human-machine interaction interface provided by the first bank server to promptly manage and control fund transaction information of an own bank card account, thereby reasonably deploy own funds. In the other embodiments of the present invention, the second bank server may set the transaction completion identifier for the cardless cash withdrawal reservation information, and may send the cardless cash withdrawal reservation information with the transaction completion identifier to a third-party server. Namely, the transaction information corresponding to the bank card number in correspondence to the reservation request is sent to the third-party server, such that the user can log in the third-party server via a terminal loading an application program of the third-party server, and can browse the transaction information of the own bank card number via a human-machine interaction interface provided by the third-party server.

The above is only the preferred embodiments of the present invention, and is not intended to limit the patent scope of the present invention accordingly. Any equivalent structure or equivalent flow transformations made by utilizing the description and drawings of the present invention may be directly or indirectly applied to other relevant technical fields, and shall similarly fall within the patent protection scope of the present invention.

## Claims

1. A transaction method for cardless cash withdrawal, comprising:
when having received a cardless cash withdrawal reservation request of a user, determining, by a first bank server, whether the reservation request is an interbank cardless cash withdrawal reservation request and satisfies a cardless cash withdrawal condition;
when the reservation request is the interbank cardless cash withdrawal reservation request and satisfies the cardless cash withdrawal condition, determining, by the first bank server, a second bank server corresponding to bank identification information in the reservation request according to a pre-stored mapping relationship between a bank server and the bank identification information; and
informing, by the first bank server, the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

2. The transaction method for cardless cash withdrawal according to claim 1, wherein after the first bank server informs the determined second bank server of the interbank cardless cash withdrawal information corresponding to the request, the method comprises:
verifying, by the second bank server, the received interbank cardless cash withdrawal information; and
after the received interbank cardless cash withdrawal information is approved, authorising, by the second bank server, the cash withdrawal terminal controlled by same to accept the cardless cash withdrawal operation made by the user according to the received interbank cardless cash withdrawal information.

3. The transaction method for cardless cash withdrawal according to claim 1 or 2, wherein after the first bank server informs the determined second bank server of the interbank cardless cash withdrawal information corresponding to the reservation request, thereby allowing the second bank server to authorize the cash withdrawal terminal controlled by same to accept the cardless cash withdrawal operation made by the user according to the received interbank cardless cash withdrawal information, the method further comprises:
when having received a cardless cash withdrawal request sent by the cash withdrawal terminal controlled by same, analysing, by the second bank server, whether there is pre-stored interbank cardless cash withdrawal information which is received from the first bank server and is consistent with the cardless cash withdrawal information in the cardless cash withdrawal request; and
when there is the pre-stored interbank cardless cash withdrawal information which is received from the first bank server and is consistent with the cash withdrawal information in the cash withdrawal request, controlling, by the second bank server, the cash withdrawal terminal, sending the cardless cash withdrawal request, to make the cardless cash withdrawal operation.

4. The transaction method for cardless cash withdrawal according to claim 3, wherein
the interbank cardless cash withdrawal information comprises a specific cash withdrawal terminal recognition identifier and interbank cardless cash withdrawal voucher information.

5. The transaction method for cardless cash withdrawal according to claim 1, further comprising:
after the cardless cash withdrawal operation is successful, setting, by the second bank server, a transaction completion identifier for cardless cash withdrawal reservation information, and sending the cardless cash withdrawal reservation information with the transaction completion identifier to the first bank server.

6. A transaction apparatus for cardless cash withdrawal, comprising:
an analysis module, configured to determine, when having received a cardless cash withdrawal reservation request of a user, whether the reservation request is an interbank cardless cash withdrawal reservation request and satisfies a cardless cash withdrawal condition;
a processing module, configured to determine, when the reservation request is the interbank cardless cash withdrawal reservation request and satisfies the cardless cash withdrawal condition, a second bank server corresponding to bank identification information in the reservation request according to a pre-stored mapping relationship between a bank server and the bank identification information; and
a data transceiver module, configured to inform the determined second bank server of interbank cardless cash withdrawal information corresponding to the reservation request, thereby allowing the second bank server to authorize a cash withdrawal terminal controlled by same to accept a cardless cash withdrawal operation made by the user according to the received interbank cardless cash withdrawal information.

7. The transaction apparatus for cardless cash withdrawal according to claim 6, further comprising an verifying module,
the verifying module is configured to verify the received interbank cardless cash withdrawal information, and
authorize the cash withdrawal terminal controlled by same to accept the cardless cash withdrawal operation made by the user according to the received interbank cardless cash withdrawal information after the received interbank cardless cash withdrawal information is approved.

8. The transaction apparatus for cardless cash withdrawal according to claim 6 or 7, wherein
the analysis module is further configured to analyse, when having received a cardless cash withdrawal request sent by the cash withdrawal terminal controlled by same, whether there is pre-stored interbank cardless cash withdrawal information which is received from the first bank server and is consistent with the cardless cash withdrawal information in the cardless cash withdrawal request; and
the processing module is configured to control, when there is the pre-stored interbank cardless cash withdrawal information which is received from the first bank server and is consistent with the cash withdrawal information in the cash withdrawal request, the cash withdrawal terminal, sending the cardless cash withdrawal request, to make the cardless cash withdrawal operation.

9. The transaction apparatus for cardless cash withdrawal according to claim 6, wherein
the interbank cardless cash withdrawal information comprises a specific cash withdrawal terminal recognition identifier and interbank cardless cash withdrawal voucher information.

10. The transaction apparatus for cardless cash withdrawal according to claim 6, wherein
the processing module is further configured to set a transaction completion identifier for cardless cash withdrawal reservation information after the cardless cash withdrawal operation is successful, and send the cardless cash withdrawal reservation information with the transaction completion identifier to the first bank server via the data transceiver module.
